# EUROPÄISCHE PATENTSCHRIFT

(11) **EP 2 800 217 B1**
(45) Veröffentlichungstag und Bekanntmachung des Hinweises auf die Patenterteilung: **18.05.2016**
(21) Anmeldenummer: 14160459.5
(22) Anmeldetag: 18.03.2014
(51) Int. Cl.: H02G 3/08, H02G 3/10

(54) **Anschlusskonsole zur Montage eines Gehäuses an einem Tragarmsystem**
Connection console for mounting a housing on a support arm system
Console de raccordement pour le montage d'un boîtier sur un système de bras porteur

(30) Priorität: 05.04.2013 DE 102013103438
(43) Veröffentlichungstag der Anmeldung: 05.11.2014
(73) Patentinhaber: Rittal GmbH & Co. KG, 35745 Herborn (DE)
(72) Erfinder: Körner, Stefan, 35713 Eschenburg (DE); Neuhof, Markus, 35630 Ehringshausen (DE)
(74) Vertreter: Angerhausen, Christoph

(56) Entgegenhaltungen:
- EP-A1- 1 137 142
- EP-A2- 2 367 248
- US-A1- 2005 285 011
- US-B1- 6 563 046

## Beschreibung

Die Erfindung betrifft ein Tragarmsystem mit einem Tragarm und einem Gerätegehäuse, das über eine Anschlusskonsole an dem Tragarm montiert ist.

Eine Anschlusskonsole für ein gattungsgemäßes Tragarmsystem ist aus der DE 201 11 382 U1 bekannt. Diese weist eine Montageseite auf, über welche die Anschlusskonsole mit Hilfe schlüssellochförmiger Ausnehmungen an einem Gehäuse festlegbar ist. Die Anschlusskonsole umschließt einen Kabelrangierraum, innerhalb welches ein Kabelabfangwinkel für das Kabelmanagement angeordnet ist. Diese Anschlusskonsole hat den Nachteil, dass sie für die Verbindung des Gehäuses an dem Tragarmsystem entweder an dem Gehäuse oder dem Tragarmsystem vormontiert werden muss, so dass jeweils das mitunter schwere und sperrige Gehäuse zielgenau an dem Tragarmsystem positioniert und verschraubt werden muss. Dazu sind in der Regel mindestens zwei Personen notwendig.

Die DE 100 13 283 B4 beschreibt ein Tragarmsystem, bei dem ein Tragarm über eine Anschlusskonsole an einem Aufnahmegehäuse befestig ist, wobei das Aufnahmegehäuse beispielsweise dazu ausgebildet sein kann, einen Monitor, etwa einen TFT-Bildschirm, aufzunehmen. Über eine rückseitige über ein Deckelelement verschlossene Revisionsöffnung der Anschlusskonsole ist der von dieser abgegrenzte Kabelrangierraum zugänglich, um Anschlusskabel von dem in dem Aufnahmegehäuse aufgenommenen Gerät durch das Aufnahmegehäuse und den Kabelrangierraum der Anschlusskonsole hindurch in einen-Tragarm des Tragarmsystems einzufädeln bzw. um einen elektrischen Kontakt zwischen entsprechend geführten Leitungen herzustellen. Das Tragarmsystem hat den Nachteil, dass es insbesondere aufgrund des Aufnahmegehäuses aufwendig und damit teuer bei der Herstellung ist. Für die Befestigung des Aufnahmegehäuses an dem Tragarm ist es wiederum zwingend erforderlich, das korrespondierende Befestigungsöffnungen zwischen dem Aufnahmegehäuse und der Anschlusskonsole fluchtend übereinander gebracht werden, um Befestigungselemente wie Schrauben einführen zu können. Dies bedingt den bereits mit Bezug auf die DE 201 11 382 U1 beschriebenen erhöhten Montageaufwand.

Die US 2005/0285011 A1 beschreibt einen Standsockel für einen Laternenpfahl und dergleichen, wobei der Standsockel einen Kabelrangierraum im Innern aufweist, der über Abdeckungen verschließbar ist. Der Standsockel ist einerseits mit dem Untergrund verschraubbar und weist andererseits eine Montageseite auf, auf der ein Laternenpfahl montiert werden kann.

Es ist daher die Aufgabe der Erfindung, ein gattungsgemäßes Tragarmsystem bereitzustellen, welches die einfache Montage des Gerätegehäuses an dem Tragarm ermöglicht.

Diese Aufgabe wird erfindungsgemäß durch ein Tragarmsystem mit den Merkmalen des Anspruchs 1 gelöst. Die abhängigen Ansprüche betreffen jeweils vorteilhafte Ausführungsformen der Erfindung.

Bei dem erfindungsgemäßen Tragarmsystem weist die Anschlusskonsole eine Gehäusebefestigung auf, mit einer Montageseite, über die die Gehäusebefestigung in zwei um 180° versetzten Positionen an dem Gerätegehäuse festlegbar ist, wobei die Montageseite eine Mehrzahl Schlüssellochöffnungen aufweist, von denen mindestens zwei um 180° versetzt zueinander ausgebildet sind. Die Anschlusskonsole weist weiterhin ein Mittelteil auf, das an der Gehäusebefestigung festlegbar ist, über eine Befestigungsseite an dem Tragarm montiert ist und einen Kabelrangierraum abgrenzt. Schließlich weist die Anschlusskonsole ein Deckelelement auf, über das eine Montage- und Revisionsöffnung des Mittelteils, über die der Kabelrangierraum zugänglich ist, wahlweise verschließbar ist. Die Gehäusebefestigung, das Mittelteil und das Deckelelement sind somit als separate Bauteile ausgeführt, wobei das Deckelelement bei einer Ausführungsform an dem Mittelteil anscharniert ist.

Die erfindungsgemäße Anschlusskonsole zeichnet sich somit gerade durch ihre Dreiteiligkeit aus. Dabei ist die Gehäusebefestigung gerade derart ausgebildet, dass sie je nach Belieben des Monteurs in zwei um 180° versetzten Positionen an dem Gehäuse festlegbar ist, so dass dieser nicht darauf achten muss, in welcher der beiden funktional identischen Ausrichtungen er die Gehäusebefestigung an dem Gehäuse montiert. Die Gehäusebefestigung ist entsprechend den beiden möglichen Befestigungspositionen an dem Gehäuse symmetrisch ausgebildet, so dass für das an der Gehäusebefestigung festlegbare Mittelteil stets eine funktional identische Befestigungsseite der Gehäusebefestigung bereitgestellt wird. Diese Symmetrie betrifft insbesondere die dem Mittelteil zugewandten Anlagekonturen sowie die Befestigungsmittel, insbesondere Gewindeaufnahmen, welche für die Befestigung des Mittelteils an der Gehäusebefestigung vorgesehen sind.

Die Auflageseiten von Mittelteil und Gehäusebefestigung, über welche die genannten Bauteile aneinander grenzen, können so aufeinander abgestimmt sein, dass ein einfaches und präzises Anordnen der Bauteile übereinander erreicht wird. Beispielsweise können das Mittelteil und die Gehäusebefestigung ineinander greifende Gleitkonturen aufweisen, über welche das Mittelteil beim Ansetzen präzise in seine Montageposition auf der Gehäusebefestigung zur Anlage gebracht werden kann, so dass etwa entsprechende Bohrungen zur Einführung von Befestigungsschrauben fluchten.

Bei einer Ausführungsform sind vier Schlüssellochöffnungen entsprechend dem VESA-Standard angeordnet, das heißt entweder mit einem Lochabstand von 75 mm oder mit einem Lochabstand von 100 mm. Bei einer Ausführungsform der Erfindung kann daher vorgesehen sein, dass die Gehäusebefestigung vier Schlüssellochöffnungen an den Eckpunkten eines Quadrates aufweist, wobei zwei erste der vier Schlüssellochöffnungen gleich ausgerichtet und zu zwei zweiten der vier Schlüssellochöffnungen um 180° versetzt ausgebildet sind.

Um den einfachen Anschluss gerätegehäuseseitig in die Anschlusskonsole eintretender Kabel zu ermöglichen, ist bei einer Ausführungsform der Erfindung vorgesehen, dass die Gehäusebefestigung einen umlaufenden Rahmen aufweist, der die Montageseite einseitig überragt und mit der Montageseite einen Installationsraum abgrenzt. Dabei ist besonders bevorzugt vorgesehen, dass in dem Installationsraum an der Innenseite des umlaufenden Rahmens ein Steg ausgebildet ist, der eine ebene Auflageseite für eine Montageplatte oder dergleichen aufweist, wobei zumindest ein Befestigungsmittel, vorzugsweise eine Gewindeaufnahme, an der Innenseite des umlaufenden Rahmens oder an dem Steg ausgebildet ist.

Um die Anschlusskonsole beispielsweise gleichzeitig für die Befestigung nach dem VESA-Standard mit 75 mm Lochabstand und wahlweise für die Befestigung nach dem VESA-Standard mit 100 mm Lochabstand verwenden zu können, ist bei einer Ausführungsform der Erfindung vorgesehen, dass die Schlüssellochöffnungen im Randbereich einer Kabeldurchführung durch die Montageseite ausgebildet sind, wobei angrenzend an die Schlüssellochöffnungen U-förmige Befestigungsausnehmungen angeformt sind, die zu der Kabeldurchführung hin geöffnet sind. Dabei können somit beispielsweise die Schlüssellochöffnungen einen Lochabstand von 100 mm aufweisen, während die U-förmigen Befestigungsausnehmungen einen Lochabstand von 75 mm aufweisen.

Um eine Kabeleinführung unmittelbar in das Mittelteil hinein zu ermöglichen, ist bei einer Ausführungsform der Erfindung vorgesehen, dass in mindestens einer der den Kabelrangierraum abgrenzenden Seitenwände ein U-förmiger Ausschnitt ausgebildet ist, der zu der Montage- und Revisionsöffnung des Mittelteils hin geöffnet ist, wobei in den U-förmigen Ausschnitt ein Kabeldurchführelement eingesetzt ist, und wobei bei auf das Mittelteil aufgesetztem Deckelelement das Deckelelement eine offene Seite des U-förmigen Ausschnitts abschließt. Die Kabeldurchführelemente können beispielsweise als gummielastische Elemente ausgebildet sein, die über eine Führungsnut am Rand auf die Berandung des U-förmigen Ausschnitts in einer Seitenwand des Mittelteils aufgeschoben werden. Die Kabeldurchführungselemente können beispielsweise Vorbohrungen unterschiedlichen Durchmessers entsprechend zu erwartender Kabeldicken aufweisen, wobei die Vorbohrungen lediglich noch durch eine dünne Trennwand verschlossen sind, welche von dem Monteur bei der Montage leicht durchstochen werden kann, um ein Kabel entsprechender Dicke in den Kabelrangierraum einzuführen.

Weitere Einzelheiten der Erfindung werden anhand der nachstehenden Figuren erläutert. Dabei zeigt:
- Figur 1: Eine perspektivische Vorderansicht einer Ausführungsform der erfindungsgemäßen Anschlusskonsole;
- Figur 2: eine perspektivische Rückansicht der Ausführungsform gemäß Figur 1;
- Figur 3: eine Explosionsdarstellung der in den Figuren 1 und 2 gezeigten Ausführungsform;
- Figur 4: eine perspektivische Sicht auf die Montageseite der Gehäusebefestigung gemäß den Figuren 1 bis 3;
- Figur 5: eine perspektivische Sicht auf die Rückseite der Gehäusebefestigung gemäß Figur 4;
- Figur 6: eine perspektivische Sicht auf die Vorderseite des Mittelteils gemäß den Figuren 1 bis 3;
- Figur 7: eine perspektivische Sicht auf die Rückseite des Mittelteils gemäß Figur 6;
- Figur 8: eine perspektivische Sicht auf die Vorderseite des Deckelelements gemäß den Figuren 1 bis 3;
- Figur 9: eine perspektivische Sicht auf die Rückseite des Deckelelements gemäß Figur 8;
- Figur 10: eine perspektivische Ansicht einer Ausführungsform des erfindungsgemäßen Kabeldurchführelements; und
- Figur 11: eine Querschnittsansicht des in Figur 10 gezeigten Kabeldurchführelements.

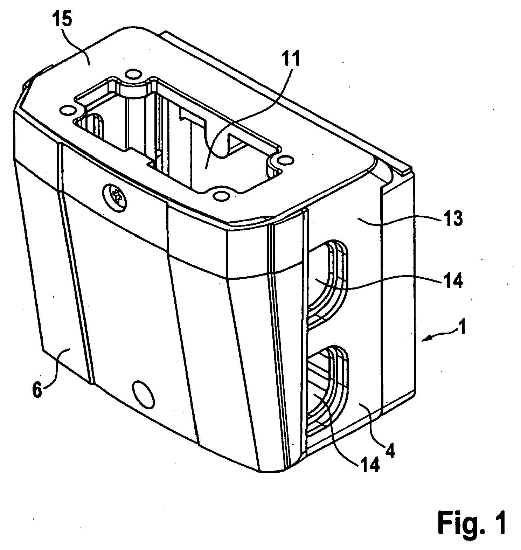

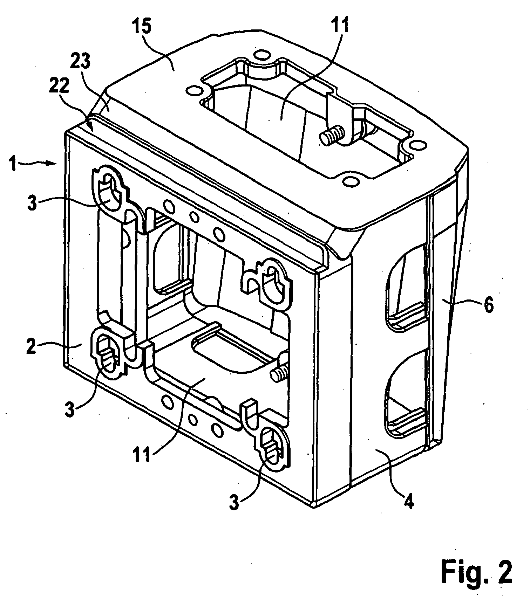

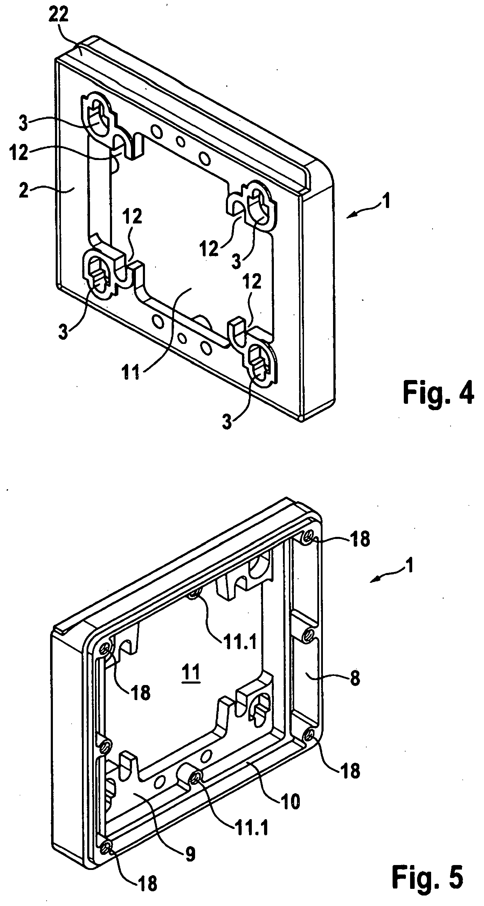

Die Figuren 1 und 2 zeigen die erfindungsgemäße Anschlusskonsole gemäß einer ersten Ausführungsform im zusammengesetzten Zustand. Die Anschlusskonsole ist dreiteilig ausgeführt und weist eine Gehäusebefestigung 1, ein Mittelteil 4 sowie ein Deckelelement 6 auf An einer im Montagezustand der Anschlusskonsole dem Gerätegehäuse zugewandten Seite der Gehäusebefestigung 1 ist eine Montageseite 2 ausgebildet. Diese bildet eine Auflageseite mit Befestigungsmitteln für die kraftschlüssige Verbindung der Gehäusebefestigung 1 mit dem Gerätegehäuse. Dazu sind vier Schlüssellochöffnungen 3 vorgesehen, welche an den Eckpunkten eines Quadrates angeordnet sind, etwa gemäß dem VESA-Standard mit 100 mm Lochabstand. Diesbezügliche Einzelheiten werden weiter unten mit Bezug auf Figur 4 beschrieben.

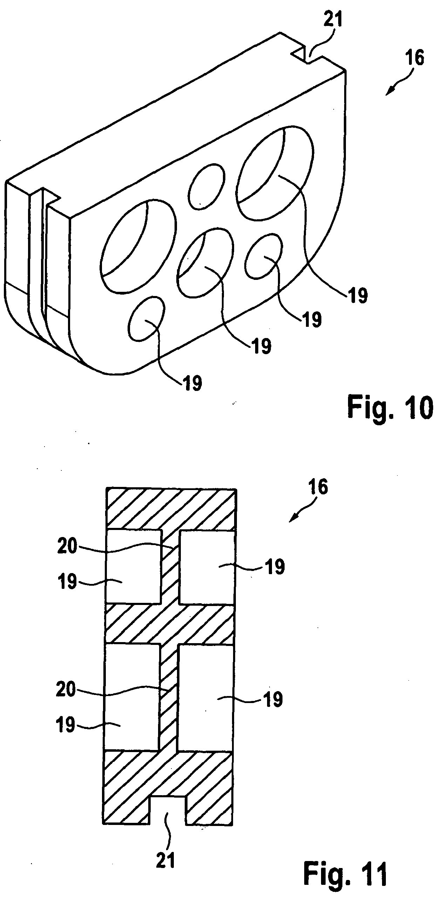

Das Mittelteil 4 weist eine Befestigungsseite 15 für die Montage der Anschlusskonsole an einem Tragarmsystem auf. Die Befestigungsseite 15 weist wiederum eine Kabeldurchführung 16 auf, welche in den Kabelrangierraum 5 (in den Figuren 1 und 2 nicht dargestellt) mündet. Damit ist es möglich, Anschlussleitungen oder dergleichen aus dem Tragarmsystem in den Kabelrangierraum, oder umgekehrt, zu überführen. Auch die Montageseite 2 weist eine Kabeldurchführung 11 auf, um Kabelanschlüsse und dergleichen unmittelbar aus dem Gerätegehäuse in den Kabelrangierraum zu überführen, ohne dass derartige Leitungen außerhalb des Tragarmsystems geführt werden müssen. In Seitenwänden 13 des Mittelteils 4 sind U-förmige Ausschnitte 14 ausgebildet, um Kabeldurchführelemente 16 (siehe Figuren 10 und 11) aufzunehmen. Im montierten Zustand gemäß den Figuren 1 und 2 verschließt das Deckelelement 6 gerade eine offene Seite der U-förmigen Ausschnitte 14 über welche die Kabeldurchführelemente 16 bei demontiertem Mittelelement 6 in die Ausschnitte 14 eingeschoben werden können, so dass bei montiertem Deckelelement 6 die Kabeldurchführelemente 16 in den Ausschnitten 14 gesichert sind.

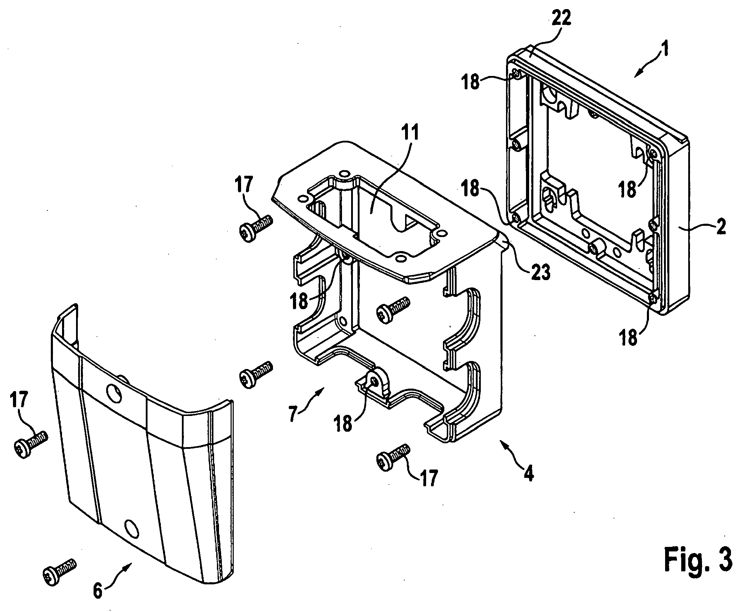

Die Figur 3 veranschaulicht die dreiteilige Ausführung der erfindungsgemäßen Anschlusskonsole, wobei in der Gehäusebefestigung 11, welche als ein im Wesentlichen rechteckiges Bauteil ausgebildet ist, in jeder Ecke an einer dem Mittelteil 4 zugewandten Seite der Gehäusebefestigung 1 eine Gewindeaufnahme 18 ausgebildet ist. Wenn die Gewindeaufnahmen 18 mit entsprechenden Durchlässen an der der Gehäusebefestigung 1 zugewandten Seite des Mittelteils 4 fluchten, kann das Mittelteil 4 auf der Gehäusebefestigung 1 mit Schrauben 17 verschraubt werden.

Für die Befestigung des Gerätegehäuses an dem Tragarmsystem wird in einem ersten Schritt die Gehäusebefestigung 1 über die Schlüssellochöffnungen 3 je nach Belieben des Monteurs in einer von zwei um 180° verdrehten Positionen an dem Gerätegehäuse verschraubt. Wie am besten in der Zusammenschau der Figuren 1 bis 3 zu erkennen ist, kann das an dem Tragarmsystem über die Befestigungsseite 15 vormontierte Mittelteil 4 unter Zuhilfenahme der an der Gehäusebefestigung 1 ausgebildeten Anlaufkontur 22 sowie der an dem Mittelteil 4 ausgebildeten Führungskante 23 derart in Bezug auf die Gehäusebefestigung 1 angeordnet werden, dass sich die zuvor beschriebenen Öffnungen für Schrauben 17 in dem Mittelteil 4 mit den Gewindeaufnahmen 18 der Gehäusebefestigung 1 fluchten. Nachdem das Mittelteil 4 in Bezug auf die Gehäusebefestigung 1 wie zuvor beschrieben vorpositioniert worden ist, kann es mit Hilfe der Schrauben 17 an der Gehäusebefestigung 1 verschraubt werden, um eine kraftschlüssige Verbindung zwischen dem Gerätegehäuse und dem Tragarmsystem herzustellen. In einem folgenden Schritt kann dann bei demontierten Deckelelement 6 das Kabelmanagement durch Zugriff auf den Kabelrangierraum 5 erfolgen, etwa um elektrische Verbindungen zwischen dem Tragarmsystem und dem Gerätegehäuse herzustellen. Nachdem auch die elektrischen Verbindungen hergestellt sind, kann der Kabelrangierraum 15 mit Hilfe des Deckelelements 6 verschlossen werden, so dass die Gehäusebefestigung 1, das Mittelteil 4 und das Deckelelement 6 eine Einheit bilden.

In den Figuren 4 und 5 ist die Gehäusebefestigung 1 gemäß den Figuren 1 bis 3 im Detail dargestellt. An der Gerätegehäuse im montierten Zustand zugewandten Seite der Gehäusebefestigung 1 ist die Montageseite 2 eben ausgebildet, um eine optimale Auflage der Gehäusebefestigung 1 auf dem Gerätegehäuse zu gewährleisten. Die Montageseite 2 weist eine Kabeldurchführung 11 auf, an deren Berandung die Schlüssellochöffnungen 3 an den Eckpunkten eines Quadrates mit der Seitenlänge 100 mm ausgebildet sind. Jeweils zwei horizontal beabstandete Schlüssellochöffnungen 3 sind gleich ausgerichtet, wobei jeweils zwei vertikal beabstandete Schlüssellochöffnungen 3 um 180° verdreht zueinander angeordnet sind. Dadurch wird erreicht, dass die Gehäusebefestigung 1 in zwei um 180° verdrehten Positionen an dem Gerätegehäuse festgelegt werden kann. Unmittelbar angrenzend an die Schlüssellochöffnungen 3 sind U-förmige Befestigungsausnehmungen ausgebildet, die zu der Kabeldurchführung 11 hin geöffnet sind. Die U-förmigen Kabeldurchführungen 11 sind an den Eckpunkten eines Quadrates mit der Seitenlänge 75 mm ausgebildet. Die Schlüssellochöffnungen 3 und die U-förmigen Befestigungsausnehmungen 12 sind damit entsprechend dem VESA-Standard angeordnet.

Die Figur 5 lässt erkennen, dass der Rahmen 8 der Gehäusebefestigung 1 die Montageseite 2 so weit einseitig überragt, dass über die Montageseite 2 in Verbindung mit dem Rahmen 8 ein Installationsraum 9 abgegrenzt ist. An der Innenseite des Rahmens 8 ist ein umlaufender Steg 10 ausgebildet, an welchen Gewindeaufnahmen 11.1 angeformt sind. Der Steg 10 bildet eine ebene Auflageseite für eine Montageplatte und dergleichen, so dass der von der Gehäusebefestigung 1 gebildete Installationsraum 9 für den Anschluss von elektrischen Leitungen, die aus dem Gerätegehäuse herausgeführt und in den Installationsraum 9 hineingeführt sind, genutzt werden kann. Auf der Montageplatte können dazu beispielsweise elektrische Verbindungselemente ausgebildet sein.

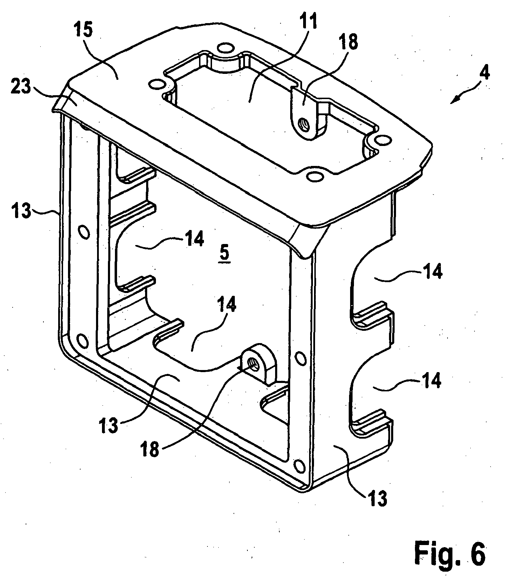

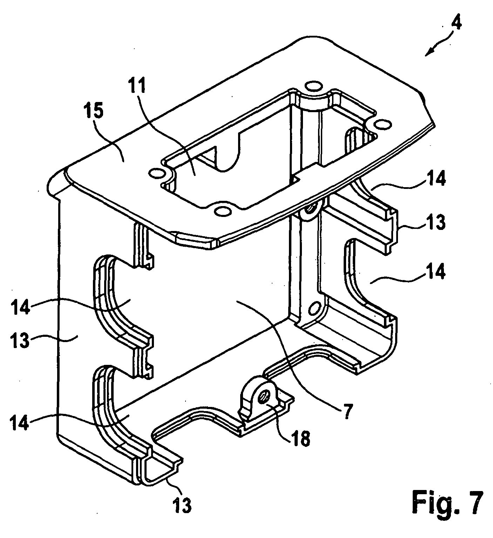

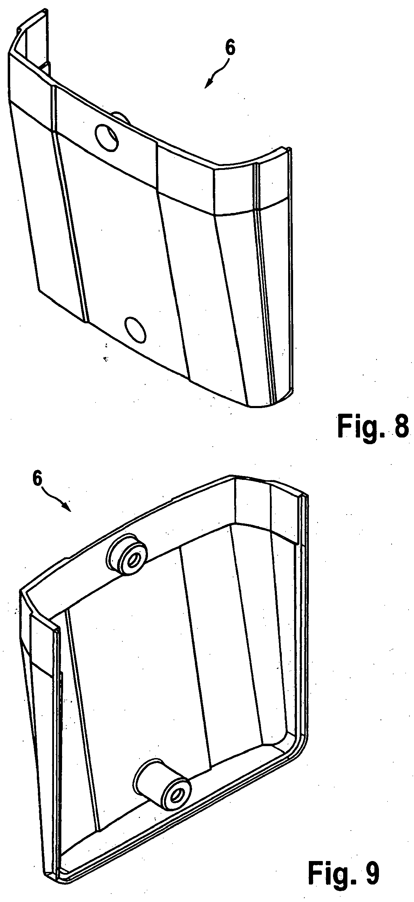

In den Figuren 6 und 7 ist das Mittelteil 4 im Detail dargestellt. Das Mittelteil 4 weist eine Befestigungsseite 15 auf, über welche die Anschlusskonsole an einem Tragarmsystem montiert werden kann. Dazu weist eine Kabeldurchführung 11 im Randbereich vier Bohrungen für die Aufnahme von Schrauben oder ähnlichen Befestigungselementen auf. Für die Befestigung des Deckelelements 6 (siehe Figuren 8 und 9) ist an der Befestigungsseite 15 eine erste Gewindeaufnahme 18 und an einer der Befestigungsseite 15 gegenüberliegenden Seitenwand 13 eine zweite Gewindeaufnahme 18 ausgebildet. Neben der Befestigungsseite 15 weist das Mittelteil 4 drei weitere Seitenwände 13 auf, welche zusammen mit der Befestigungsseite 15 den Kabelrangierraum 5 abgrenzen. Die Seitenwände 13 weisen U-förmige Ausschnitte zur Aufnahme von Kabeldurchführelementen auf, wobei die Ausschnitte 14 zu einer Revisionsöffnung 7, über welche der Kabelrangierraum 5 im fertig montierten Zustand der Anschlusskonsole nach Entfernen des Deckelelements 6 zugänglich ist, geöffnet sind.. An der in Montageposition der Gehäusebefestigung 1 zugewandten Seite des Mittelteils 4 ist eine Führungskante 23 ausgebildet, welche mit einer Anlaufkontur 22 der Gehäusebefestigung 1 (siehe Figur 4) derart zusammenwirkt, dass beim Aufsetzen des Mittelteils 4 auf die Gehäusebefestigung 1 das Mittelteil in seine Montageposition bezüglich der Gehäusebefestigung 1 geführt wird.

In den Figuren 8 und 9 ist das Deckelelement 6 gezeigt. Es ist im Wesentlichen keilförmig und konvex ausgebildet und weist zwei Bohrungen zum Einsetzen von Schrauben 17 (siehe Figur 3) auf, um das Deckelelement 6 über die Gewindeaufnahmen 18 des Mittelteils 4 (siehe Figur 3) an dem Mittelteil 4 zu befestigen. Das Deckelelement 6 weist an seiner inneren Berandung ein Dichtelement auf.

Die Figuren 10 und 11 zeigen eine Ausführungsform des erfindungsgemäßen Kabeldurchführelements 16. Dieses ist als ein im Wesentlichen U-förmiges, gummielastisches Element ausgebildet, welches an zwei parallel beabstandeten Außenseiten korrespondierende, das heißt fluchtende Vorbohrungen 19 aufweist, welche lediglich noch durch eine vergleichsweise dünne Trennwand 20 voneinander getrennt sind. Die Vorbohrungen sind entsprechend zu erwartender Kabeldurchmesser mit unterschiedlichen Durchmessern ausgebildet. Im Anwendungsfall kann der Monteur dann entsprechend dem tatsächlichen Durchmesser des einzuführenden Kabels die Trennwand zwischen fluchtenden Vorbohrungen 19 entsprechenden Durchmessers durchtrennen, um das Kabel in den Kabelrangierraum einzuführen. Um ein einfaches und sicheres Einsetzen des Kabeldurchführelements 16 in die U-förmigen Ausschnitte 14 des Mittelteils (siehe Figuren 6 und 7) zu ermöglichen, weist das Kabeldurchführelement eine Führungsnut 21 auf, in welche im eingesetzten Zustand eine entsprechende Feder an der Umrandung der U-förmigen Ausschnitte 14 eingreift. Im eingesetzten Zustand und bei montiertem Deckelelement 6 verschließt das Deckelelement 6 die Einschuböffnung des U-förmigen Ausschnitts 14, so dass das eingesetzte Kabeldurchführelement 16 sicher gehaltert ist.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

## Patentansprüche

1. Tragarmsystem mit einem Tragarm und einem Gerätegehäuse, das über eine Anschlusskonsole an dem Tragarm montiert ist, wobei die Anschlusskonsole aufweist:
- eine Gehäusebefestigung (1), mit einer Montageseite (2), über die die Gehäusebefestigung (1) in zwei um 180° versetzten Positionen an dem Gerätegehäuse festgelegt ist, wobei die Montageseite (2) eine Mehrzahl Schlüssellochöffnungen (3) aufweist, von denen mindestens zwei um 180° versetzt zueinander ausgebildet sind;
- ein Mittelteil (4), das an der Gehäusebefestigung (1) festgelegt ist, und das über eine Befestigungsseite (15) an dem Tragarm montiert ist und einen Kabelrangierraum (5) abgrenzt; und
- ein Deckelelement (6), über das eine Montage- und Revisionsöffnung (7) des Mittelteils (4), über die der Kabelrangierraum (5) zugänglich ist, wahlweise verschließbar ist.

2. Tragarmsystem nach Anspruch 1, bei der die Gehäusebefestigung (1) vier Schlüssellochöffnungen (3) an den Eckpunkten eines Quadrates aufweist, wobei zwei erste der vier Schlüssellochöffnungen (3) gleich ausgerichtet und zu zwei zweiten der vier Schlüssellochöffnungen (3) um 180° versetzt ausgebildet sind.

3. Tragarmsystem nach Anspruch 1 oder 2, bei der die Gehäusebefestigung (1) einen umlaufenden Rahmen (8) aufweist, der die Montageseite (2) einseitig überragt und mit der Montageseite (2) einen Installationsraum (9) abgrenzt.

4. Tragarmsystem nach Anspruch 3, bei der in dem Installationsraum (9) an der Innenseite des umlaufenden Rahmens (8) ein Steg (10) ausgebildet ist, der eine Ebene Auflageseite für eine Montageplatte oder dergleichen aufweist, wobei mindestens ein Befestigungsmittel, vorzugsweise eine Gewindeaufnahme (11.1), an der Innenseite des umlaufenden Rahmens (8) oder an dem Steg (10) ausgebildet ist.

5. Tragarmsystem nach einem der vorangegangen Ansprüche, bei der die Schlüssellochöffnungen (3) im Randbereich einer Kabeldurchführung (11) durch die Montageseite (2) ausgebildet sind, wobei angrenzend an die Schlüssellochöffnungen (3) U-förmige Befestigungsausnehmungen (12) angeformt sind, die zu der Kabeldurchführung (11) hin geöffnet sind.

6. Tragarmsystem nach einem der vorangegangenen Ansprüche, bei der in mindestens einer der den Kabelrangierraum (5) abgrenzenden Seitenwände (13) ein U-förmiger Ausschnitt (14) ausgebildet ist, der zu der Montage- und Revisionsöffnung (7) des Mittelteils (4) hin geöffnet ist, wobei in den U-förmigen Ausschnitt (14) ein Kabeldurchführelement (16) eingesetzt ist, und wobei bei auf das Mittelteil (4) aufgesetztem Deckelelement (6) das Deckelelement (6) eine offene Seite des U-förmigen Ausschnitts (14) abschließt.

## Claims

1. A support arm system having a support arm and a device case that is mounted via a connection console on the support arm, wherein the connection console comprises:
- a case mounting (1) having a mounting side (2) through which the case mounting (1) is fixed on the device case in two positions which are offset by 180°, wherein the mounting side (2) has a plurality of key hole openings (3), at least two of them being positioned offset from one another by 180°;
- a central part (4) which is fixed on the case mounting (1), and which is mounted to the support arm via an attachment side, and which defines a cable maneuvering space (5); and
- a cover element (6) which closes, as needed, a mounting and inspection opening (7) of the central part (4) through which the cable maneuvering space (5) can be accessed.

2. The support arm system of claim 1, wherein the case mounting (1) comprises four key hole openings (3) in the corners of a square, wherein two first ones of the four key hole openings (3) are equally aligned and are offset by 180° with respect to two second ones of the four key hole openings (3).

3. The support arm system of claim 1 or 2, wherein the case mounting (1) comprises a continuous frame (8) which extends from the mounting side (2) in one direction and which defines, together with the mounting side (2), an installation space (9).

4. The support arm system of claim 3, wherein a bar (10) is formed on an inner surface of the continuous frame (8) within the installation space (9), which bar comprises a flat surface for a mounting plate or the like, wherein at least one fixing means, preferably a threaded body (11.1), is formed on the inner surface of the continuous frame (8) or on the bar (10).

5. The support arm system of any of the preceding claims, wherein the key hole openings (3) are formed in a peripheral zone of a cable bushing (11) through the mounting side (2), wherein U-shaped fastening seats (12) are formed adjacent to the key hole openings (3) which are open towards the cable bushing (11).

6. The support arm system of any of the preceding claims, wherein a U-shaped recess (14) is provided in at least one of the side walls (13) defining the usable cable space (5), which recess is open towards the mounting and inspection opening (7) of the central part (4), wherein a cable bushing element (16) is inserted into the U-shaped recess (14) and wherein the cover element (6) closes an open side of the U-shaped recess (14) when the cover element is placed on the central part (4).

## Revendications

1. Système de bras porteur avec un bras porteur et un boîtier d'appareil, qui est monté, par l'intermédiaire d'une console de raccordement, sur le bras porteur, la console de raccordement comprenant :
- une fixation de boîtier (1), avec un côté de montage (2), par l'intermédiaire duquel la fixation de boîtier (1) est fixé dans deux positions, décalées de 180°, sur le boîtier d'appareil, le côté de montage (2) présentant une pluralité de trous de serrures (3), dont au moins deux sont disposés de manière décalée de 180° l'un de l'autre ;
- une partie centrale (4), qui est fixée à la fixation de boîtier (1) et qui est monté, par l'intermédiaire d'un côté de fixation (15), sur le bras porteur et qui délimite un espace de rangement de câbles (5) ; et
- un élément de couvercle (6) par l'intermédiaire duquel une ouverture de montage et de révision (7) de la partie centrale (4), par l'intermédiaire de laquelle l'espace de rangement de câbles (5) est accessible, peut être fermée de manière sélective.

2. Système de bras porteur selon la revendication 1, dans lequel la fixation de boîtier (1) comprend quatre trous de serrures (3) au niveau des angles d'un carré, deux premiers des quatre trous de serrures (3) étant orientés de manière identique et deux deuxièmes des quatre trous de serrures (3) étant décalés de 180°.

3. Système de bras porteur selon la revendication 1 ou 2, dans lequel la fixation de boîtier (1) comprend un cadre rotatif (8) qui dépasse d'un côté du côté de montage (2) et délimite, avec le côté de montage (2), un espace d'installation (9).

4. Système de bras porteur selon la revendication 3, dans lequel, dans l'espace d'installation (9), à l'intérieur du cadre rotatif (8), se trouve une nervure (10), qui comprend un côté d'appui plan pour une plaque de montage ou autre, au moins un moyen de fixation, de préférence un logement fileté (11.1) étant prévu à l'intérieur du cadre rotatif (8) ou au niveau de la nervure (10).

5. Système de bras porteur selon l'une des revendications précédentes, dans lequel les trous de serrures (3) sont prévus au bord d'un passage de câble (11) à travers le côté de montage (2), des évidements de fixation (12) en forme de U étant moulés de manière adjacente au trous de serrures (3), qui sont ouverts en direction du passage de câble (11).

6. Système de bras porteur selon l'une des revendications précédentes, dans lequel, dans au moins une des parois latérales (13) délimitant l'espace de rangement de câbles (5), une découpe (14) en forme de U est prévue, qui est ouverte en direction de l'ouverture de montage et de révision (7) de la partie centrale (4), un élément de passage de câble (16) étant inséré dans la découpe en forme de U (14) et, lorsque l'élément de couvercle (6) est posé sur la partie centrale (4), l'élément de couvercle (6) ferme un côté ouvert de la découpe en forme de U (14).
